(19) Europäisches Patentamt
European Patent Office
Office européen des brevets

(11) EP 4 693 567 A1

(12) EUROPEAN PATENT APPLICATION

(43) Date of publication:
**11.02.2026 Bulletin 2026/07**

(21) Application number: **25173461.2**

(22) Date of filing: **30.04.2025**

(51) International Patent Classification (IPC):
***H01M 10/0567*** *(2010.01)* ***H01M 10/0525*** *(2010.01)*
***H01M 10/42*** *(2006.01)* *H01M 4/36* *(2006.01)*
*H01M 4/38* *(2006.01)* *H01M 4/58* *(2010.01)*
*H01M 4/587* *(2010.01)* *H01M 10/0568* *(2010.01)*
*H01M 10/0569* *(2010.01)*

(52) Cooperative Patent Classification (CPC):
**H01M 10/0567; H01M 10/0525; H01M 10/4235;**
H01M 4/364; H01M 4/386; H01M 4/5825;
H01M 4/587; H01M 10/0568; H01M 10/0569;
H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 KR 20240105491**

(71) Applicant: **SAMSUNG SDI CO., LTD.**
**Yongin-si, Gyeonggi-do 17084 (KR)**

(72) Inventors:
- **Jun, Dasol**
  **17084 Yongin-si, Gyeonggi-do (KR)**
- **Choi, Hyunbong**
  **17084 Yongin-si, Gyeonggi-do (KR)**
- **Park, Sangwoo**
  **17084 Yongin-si, Gyeonggi-do (KR)**
- **Ji, Woojung**
  **17084 Yongin-si, Gyeonggi-do (KR)**
- **Kim, Sohee**
  **17084 Yongin-si, Gyeonggi-do (KR)**
- **Yang, Yeji**
  **17084 Yongin-si, Gyeonggi-do (KR)**
- **Shin, Youngkyeong**
  **17084 Yongin-si, Gyeonggi-do (KR)**
- **Lim, Seiyeon**
  **17084 Yongin-si, Gyeonggi-do (KR)**
- **Tsay, Olga**
  **17084 Yongin-si, Gyeonggi-do (KR)**
- **Kim, Sanghoon**
  **17084 Yongin-si, Gyeonggi-do (KR)**
- **Park, Hongryeol**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE FOR RECHARGEABLE LITHIUM BATTERY AND RECHARGEABLE LITHIUM BATTERY INCLUDING THE SAME

(57) Electrolytes and rechargeable lithium batteries are provided. An electrolyte includes a non-aqueous organic solvent, a lithium salt, a first additive represented by Chemical Formula 1, and a second additive represented by Chemical Formula 2.

EP 4 693 567 A1

Chemical Formula 1

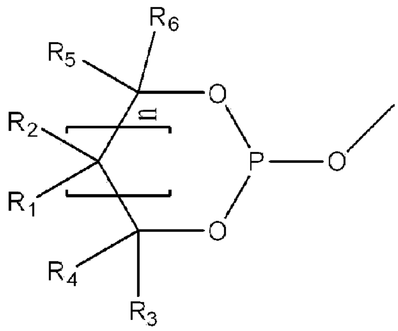

Chemical Formula 2

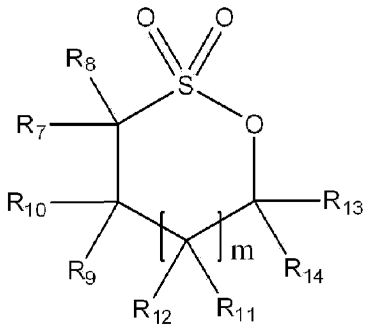

## Description

## BACKGROUND

### 1. Field

According to one or more embodiments, the present disclosure relates to an electrolyte for a rechargeable lithium battery and a rechargeable lithium battery including the electrolyte.

### 2. Background

The rapid proliferation (e.g., spread and popularization) of battery-powered and battery-using electronic devices(such as mobile phones, laptop computers, and/or like) and/or electric vehicles, has significantly increased the demand for rechargeable batteries with (e.g., equipped or provided with) relatively high energy density and high capacity. Therefore, intensive research has been conducted to improve performance of rechargeable lithium batteries, e.g., as a driving power source for hybrid and/or electric vehicles, and/or as a power storage power source, e.g., for resident power storage (e.g., a power wall).

A rechargeable lithium battery includes a positive electrode, a negative electrode, and an electrolyte, which positive and negative electrodes each include an active material configured for intercalation and deintercalation of lithium ion. The batteries generate electrical energy through (e.g., caused by) oxidation and reduction (e.g., redox) reactions when the lithium ions are intercalated and deintercalated during the charging and discharge process.

A lithium salt in a non-aqueous organic solvent is utilized as the electrolyte of the rechargeable lithium battery. The characteristics of the rechargeable lithium battery are determined (e.g., exhibited) by complex reactions between the positive electrode and the electrolyte as well as between the negative electrode and the electrolyte. Accordingly, the utilization (e.g., selecting) of an appropriate or suitable electrolyte is an important variable for enhancing (e.g., improving) the performance of rechargeable lithium batteries.

## SUMMARY

The invention is defined by the appended claims. The description that follows is subjected to this limitation. Any disclosure lying outside the scope of said claims is only intended for illustrative as well as comparative purposes.

One or more aspects are directed toward an electrolyte for a rechargeable lithium battery with enhanced (e.g., improved) stability and lifespan characteristics at high temperatures.

One or more aspects are directed toward a rechargeable lithium battery including the electrolyte.

Additional aspects will be set forth in part in the description which follows and, in part, will be apparent from the description, or may be learned by practice of the presented embodiments of the disclosure.

According to one or more embodiments of the present disclosure, an electrolyte for a rechargeable lithium battery includes a non-aqueous organic solvent, a lithium salt, a first additive represented by Chemical Formula 1, and a second additive represented by Chemical Formula 2.

Chemical Formula 1

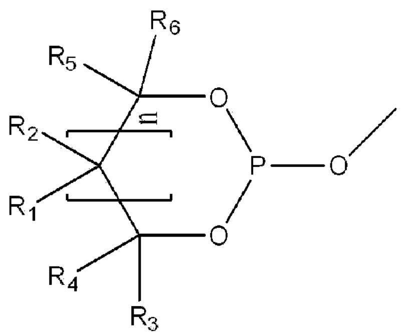

Chemical Formula 2

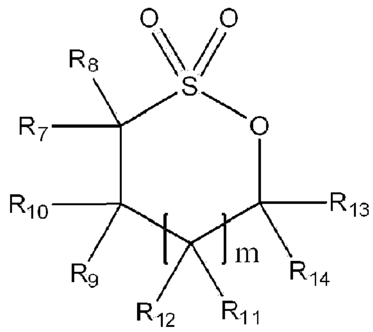

In Chemical Formula 1, $R_1$ to $R_6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and n is an integer of 0 or 1.

In Chemical Formula 2, $R_7$ to $R_{14}$ are each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group, and m is an integer of 0 to 3.

In one or more embodiments, Chemical Formula 1 may include at least one selected from among a compound represented by Chemical Formula 1-1 and a compound represented by Chemical Formula 1-2,

Chemical Formula 1-1

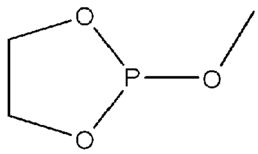

Chemical Formula 1-2

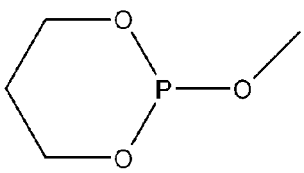

.

In one or more embodiments, the second additive may include at least one selected from among a compound represented by Chemical Formula 2-1 and a compound represented by Chemical Formula 2-2,

Chemical Formula 2-1

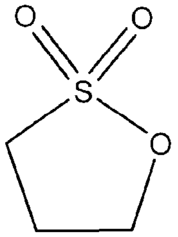

Chemical Formula 2-2

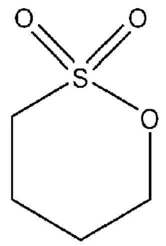

.

In one or more embodiments, the first additive has an amount of 0.01 wt% to 5 wt% based on a total weight of the electrolyte.

In one or more embodiments, the second additive may have an amount of 0.01 wt% to 5 wt% based on a total weight of the electrolyte.

In one or more embodiments, an amount ratio of the second additive represented by Chemical Formula 2 to the first additive represented by Chemical Formula 1 may be 1:5 to 5:1.

In one or more embodiments, the non-aqueous organic solvent may include at least one selected from among ethylmethyl carbonate (EMC), ethylene carbonate (EC), dimethyl carbonate (DMC), propylene carbonate (PC), propyl propionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

In one or more embodiments, the lithium salt may include at least one selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$.

In one or more embodiments, a concentration of the lithium salt may be 0.1 M to 2.0 M.

According to one or more embodiments of the present disclosure, a rechargeable lithium battery may include a positive electrode that includes a positive electrode active material, a negative electrode that includes a negative electrode active material, and an electrolyte as defined above.

In one or more embodiments, the positive electrode active material may include lithium composite oxide represented by Chemical Formula 3,

Chemical Formula 3 $$Li_xM^1_yM^2_zM^3_{1-y-z}O_{2-a}X_a$$

In Chemical Formula 3, $0.5 \leq x \leq 1.8$, $0 \leq a \leq 0.05$, $0 < y \leq 1$, $0 \leq z \leq 1$, and $0 \leq y+z \leq 1$, $M^1$, $M^2$, and $M^3$ each independently may include at least one selected from among Ni, Co, Mn, Al, B, Ba, Ca, Ce, Cr, Fe, Mo, Nb, Si, Sr, Mg, Ti, V, W, Zr, La, and a combination thereof, and X may include at least one selected from among F, S, P, and Cl.

In one or more embodiments, the positive electrode active material may include a lithium-iron-phosphate-based compound.

In one or more embodiments, the negative electrode active material may include at least one selected from among graphite and a silicon composite.

In one or more embodiments, the rechargeable lithium battery may be a cylindrical, prismatic, pouch-type, or coin-type battery.

## BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:

FIG. 1 illustrates a simplified conceptual diagram showing a rechargeable lithium battery according to one or more embodiments of the present disclosure.

FIGS. 2 - 5 illustrate simplified diagrams each showing a rechargeable lithium battery according to one or more embodiments of the present disclosure.

## DETAILED DESCRIPTION

Hereinafter, embodiments of the present disclosure will be described clearly and in more detail to such an extent that those skilled in the art easily implement the present disclosure. In order to sufficiently understand the configuration and

effect of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In this description, it will be understood that, if (e.g., when) an element or component is referred to as being on another element, the element or component may be directly on the other element or intervening elements may be present between therebetween. In contrast, if (e.g., when) an element is referred to as being "directly on" another element, there are no intervening elements present. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form (e.g., "a," "an," and/or "the") may include the expression of plural form, including "at least one," unless the context clearly dictates otherwise. The terms "comprises," "includes," "has," "comprising," "including," "having," "comprise," "include," and/or "has" as used in this description, are intended to designate the presence of an embodied aspect, number, step (e.g., act or task), element, and/or a (e.g., any suitable) combination thereof, and do not preclude or exclude the presence or addition of one or more other features, numbers, steps (e.g., acts or tasks), elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In this description, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

In this description, unless otherwise separately defined, the term "substituted" refers to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

In more detail, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, and/or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, and/or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, and/or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, and/or a naphthyl group.

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode 10

The positive electrode 10 for a rechargeable lithium battery may include a current collector COL1 and a positive electrode active material layer AML1 on (e.g., formed on) the current collector COL1. The positive electrode active material layer AML1 may include a positive electrode active material and further include a binder and/or a conductive material (e.g., electron conductor).

For example, the positive electrode 10 may further include an additive that may serve as a sacrificial positive electrode.

An amount of the positive electrode active material may be 90 weight (wt)% to 99.5 wt% based on (e.g., relative to) a total weight (100 wt%) of the positive electrode active material layer AML1. An amount of each of the binder and the conductive material may be 0.5 wt% to 5 wt% based on 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be utilized to provide an electrode with conductivity, and any suitable conductive material that does not cause a chemical change in a battery may be utilized as the conductive material. The conductive material may include, for example, a carbon-based material such as natural graphite, artificial graphite, carbon black,

acetylene black, Ketjen black, carbon fiber, carbon nano-fiber, and/or carbon nano-tube; a metal powder or metal fiber including one or more of copper, nickel, aluminum, and/or silver; a conductive polymer such as a polyphenylene derivative; and/or a (e.g., any suitable) mixture thereof.

Aluminum (Al) may be utilized as the current collector COL1, but the present disclosure is not limited thereto.

**Positive Electrode Active Material**

The positive electrode active material in the positive electrode active material layer AML1 may include a compound (e.g., a lithiated intercalation compound) that may reversibly intercalate and deintercalate lithium. For example, the positive electrode active material may include at least one kind of composite oxide including lithium and metal that is selected from among cobalt, manganese, nickel, and/or a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed (represented) by one of (e.g., at least one selected from among) chemical formulae, such as $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_{d-}G_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and/or $Li_aFePO_4$ (where $0.90 \leq a \leq 1.8$).

In the chemical formulae above, A may be Ni, Co, Mn, and/or a (e.g., any suitable) combination thereof, X may be Al, Ni, Co, Mn, Cr, Fe, Mg, Sr, V, a rare-earth element, and/or a (e.g., any suitable) combination thereof, D may be O, F, S, P, and/or a (e.g., any suitable) combination thereof, G may be Al, Cr, Mn, Fe, Mg, La, Ce, Sr, V, and/or a (e.g., any suitable) combination thereof, and $L^1$ may be Mn, Al, and/or a (e.g., any suitable) combination thereof.

For example, the positive electrode active material may be a high-nickel-based positive electrode active material having a nickel amount of equal to or greater than 80 mole (mol)%, equal to or greater than 85 mol%, equal to or greater than 90 mol%, equal to or greater than 91 mol%, or equal to or greater than 94 mol%, and equal to or less than 99 mol% based on a total mole (100 mol%) of metal devoid of lithium in the lithium transition metal composite oxide. The high-nickel-based positive electrode active material may achieve relatively high capacity and thus may be applied to a high-capacity and high-density rechargeable lithium battery. In other words, the positive electrode active material may be a high-nickel-based material with a nickel content ranging from 80 mol% to 99 mol%. This high-nickel composition enables the material to achieve high capacity, making it suitable for use in high-capacity and high-density rechargeable lithium batteries.

**Negative Electrode 20**

The negative electrode 20 for a rechargeable lithium battery may include a current collector COL2 and a negative electrode active material layer AML2 on (e.g., positioned on) the current collector COL2. The negative electrode active material layer AML2 may include a negative electrode active material and may further include a binder and/or a conductive material (e.g., electron conductor).

For example, the negative electrode active material layer AML2 may include a negative electrode active material of 90 wt% to 99 wt%, a binder of 0.5 wt% to 5 wt%, and a conductive material of 0 wt% to 5 wt%, based on a total weight (100 wt%) of the negative electrode active material layer AML2.

The binder may serve to improve attachment of negative electrode active material particles to each other and also to improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If (e.g., when) an aqueous binder is utilized as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal

may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be utilized to provide an electrode with conductivity, and any suitable conductive material that does not cause a chemical change in a battery may be utilized as the conductive material. For example, the conductive material may include a carbon-based material such as natural graphite, artificial graphite, carbon black, acetylene black, Ketjen black, carbon fiber, carbon nano-fiber, and/or carbon nano-tube; a metal powder or metal fiber including one or more of copper, nickel, aluminum, and/or silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that may reversibly intercalate and deintercalate lithium ions, a lithium metal, a lithium metal alloy, a material that may dope and/or de-dope lithium, and/or a transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include at least one graphite such as non-shaped, sheet-shaped, flake-shaped, sphere-shaped, fiber-shaped natural and/or artificial graphite, and the amorphous carbon may include soft carbon, hard carbon, mesophase pitch carbon, and/or calcined coke.

The lithium metal alloy may include an alloy of lithium and at least one metal that is selected from among Na, K, Rb, Cs, Fr, Be, Mg, Ca, Sr, Si, Sb, Pb, In, Zn, Ba, Ra, Ge, Al, and/or Sn.

The material that may dope and/or de-dope lithium may include a Si-based negative electrode active material and/or a Sn-based negative electrode active material. The Si-based negative electrode active material may include silicon, silicon-carbon composite, $SiO_x$ (where $0<x\leq2$), Si-Q alloy (where Q is alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, $SnO_2$, $SnO_x$ (where $0<x \leq 2$), a Sn-based alloy, and/or a (e.g., any suitable) combination thereof.

The silicon-carbon composite may be a composite of silicon and amorphous carbon. According to one or more embodiments, the silicon-carbon composite may have a structure in which the amorphous carbon is on (e.g., coated on) a surface of the silicon particle. For example, the silicon-carbon composite may include a secondary particle (core) in which primary silicon particles are assembled, and an amorphous carbon coating layer (shell) on (e.g., positioned on) a surface of the secondary particle. The amorphous carbon may also be between (e.g., positioned between) the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on (e.g., positioned on) a surface of the core.

The Si-based negative electrode active material or the Sn-based negative electrode active material may be utilized in combination with a carbon-based negative electrode active material.

**Separator 30**

Based on a type (kind) of the rechargeable lithium battery, the separator 30 may be present between positive electrode 10 and the negative electrode 20. The separator 30 may include one or more of polyethylene, polypropylene, and/or polyvinylidene fluoride, and may have a multi-layered separator thereof such as a polyethylene/polypropylene bi-layered separator, a polyethylene/polypropylene/polyethylene tri-layered separator, a polypropylene/polyethylene/polypropylene tri-layered separator, and/or the like.

The separator 30 may include a porous substrate and a coating layer on (e.g., positioned on) one or opposite surfaces of the porous substrate, which coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide,

polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., TEFLON®), or may be a copolymer or mixture including two or more of the materials mentioned above.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but the present disclosure is not limited thereto.

The organic material and the inorganic material may be present mixed in one coating layer or may be present as a stack of a coating layer including the organic material and a coating layer including an inorganic material.

**Electrolyte ELL**

The electrolyte ELL for a rechargeable lithium battery includes a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, and/or cyclic structure and may include a double bond, an aromatic ring, and/or an ether group); amides such as dimethylformamide; dioxolanes such as 1,3-dioxolane or 1.4-dioxolane; and/or sulfolanes.

The non-aqueous organic solvent may be utilized alone or in a mixture of two or more substances.

In some embodiments, if (e.g., when) a carbonate-based solvent is utilized, a cyclic carbonate and a chain carbonate may be mixed and utilized, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are each integers of 1 to 20), lithium trifluoromethane sulfonate, lithium tetrafluoroethanesulfonate, lithium difluorobis(oxalato) borate (LiDFOB), lithium difluorobis(oxalato)phosphate (LiDFOP), and/or lithium bis(oxalato)borate (LiBOB).

**Rechargeable Lithium Battery**

Based on a shape of a rechargeable lithium battery, the rechargeable lithium battery may be classified into cylindrical, prismatic, pouch, and coin types (kinds). In

FIGS. 2 to 5 illustrating simplified diagrams showing a rechargeable lithium battery according to one or more embodiments, FIG. 2 shows a cylindrical battery, FIG. 3 shows a prismatic battery, and FIGS. 4 and 5 show pouch-type (kind) batteries. Referring to FIGS. 2 to 4, a rechargeable lithium battery 100 may include an electrode assembly 40 in which a separator 30 is between (e.g., interposed between) a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. As shown in each of FIGS. 4 and 5, the rechargeable lithium battery 100 may include an electrode tab 70, or a positive electrode tab 71 and a negative electrode tab 72, which electrode tabs 70, 71, and 72 may serve as an electrical path for externally inducing a current generated in the electrode assembly 40.

The following will describe in more detail an electrolyte for a rechargeable lithium battery according to one or more embodiments of the present disclosure.

An electrolyte for a rechargeable lithium battery includes a non-aqueous organic solvent, a lithium salt, a first additive represented by Chemical Formula 1 which will be discussed, and a second additive represented by Chemical Formula 2 which will be discussed.

The electrolyte may be prepared by a mixing process in which the lithium salt is dissolved in the non-aqueous organic solvent, and the first additive and the second additive are added to mix. The electrolyte mixing process is widely suitable in electrolyte fabrication field, and a person skilled in the art will be able to appropriately or suitably select and utilize.

The non-aqueous organic solvent may include at least one selected from among ethylene carbonate (EC), ethylmethyl carbonate (EMC), dimethyl carbonate (DMC), propylene carbonate (PC), propyl propionate (PP), diethyl carbonate (DEC), dipropyl carbonate (DPC), methylpropyl carbonate (MPC), ethylpropyl carbonate (EPC), methylethyl carbonate (MEC), and/or butylene carbonate (BC).

In one or more embodiments, the non-aqueous organic solvent may be a mixed solvent of ethylene carbonate (EC), ethylmethyl carbonate (EMC), and/or dimethyl carbonate (DMC).

For example, the ethylene carbonate (EC) may be included in an amount of 5 volume (vol)% to 40 vol% based on a total volume (100 vol%) of the non-aqueous organic solvent. The ethylmethyl carbonate (EMC) may be included in an amount of 20 vol% to 70 vol% based on the total volume of the non-aqueous organic solvent. The dimethyl carbonate (DMC) may be included in an amount of 10 vol% to 70 vol% based on the total volume of the non-aqueous organic solvent.

The lithium salt may include at least one selected from among $LiPF_6$, $LiBF_4$, $LiSbF_6$, $LiAsF_6$, LiClO4, $LiAlO_2$, $LiAlCl_4$, $LiPO_2F_2$, LiCl, LiI, $LiN(SO_3C_2F_5)_2$, $Li(FSO_2)_2N$, lithium bis(fluorosulfonyl)imide (LiFSI), and/or $LiC_4F_9SO_3$. According to one or more embodiments, the lithium salt may include $LiPF_6$.

The lithium salt may have a concentration of 0.1 M to 2.0 M. For example, the lithium salt may have a concentration of equal to or greater than 0.5 M or equal to or greater than 1.0 M. The lithium salt may have a concentration of equal to or less than 2.0 M, equal to or less than 1.7 M, or equal to or less than 1.5 M. In the present disclosure, if (e.g., when) the lithium salt has a concentration of 0.1 M to 2.0 M, the electrolyte may appropriately or suitably maintain its conductivity and viscosity.

**First Additive**

The first additive according to the present disclosure is represented by Chemical Formula 1.

Chemical Formula 1

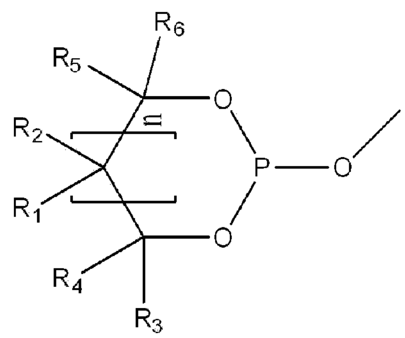

In Chemical Formula 1, $R_1$ to $R_6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, and/or a substituted or unsubstituted C2 to C20 heteroaryl group.

n is an integer of 0 or 1. n being zero refers to a direct bond. For example, if n is zero, a cyclic phospholane derivative portion containing a -OPO- functional group is a pentagonal ring.

In one or more embodiments, Chemical Formula 1 may be represented by Chemical Formula 1A or 1B.

Chemical Formula 1A

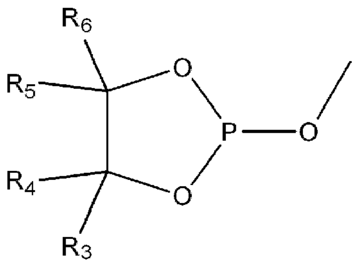

Chemical Formula 1B

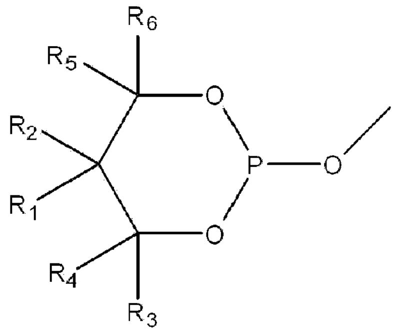

In Chemical Formulae 1A and 1B, $R_1$ to $R_6$ are each independently hydrogen, a substituted or unsubstituted C1 to C10 alkyl group, a substituted or unsubstituted C1 to C10 alkoxy group, a substituted or unsubstituted C2 to C10 alkenyl group, and/or a substituted or unsubstituted C2 to C10 alkynyl group.

In one or more embodiments, Chemical Formula 1 may be represented by Chemical Formula 1A. $R_3$ to $R_6$ of Chemical Formula 1A may each be hydrogen. In one or more embodiments, Chemical Formula 1 may be represented by Chemical Formula 1B. $R_1$ to $R_6$ of Chemical Formula 1B may each be hydrogen.

According to one or more embodiments, the first additive represented by Chemical formula 1 may be a compound of Chemical Formula 1-1 or Chemical Formula 1-2.

Chemical Formula 1-1

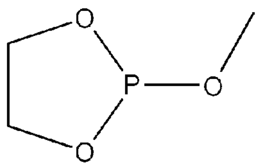

Chemical Formula 1-2

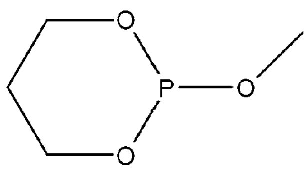

For example, the first additive represented by Chemical Formula 1 may be at least one selected from among 2-methoxy-1,3,2-dioxaphospholane and/or 2-methoxy-1,3,2-dioxaphosphinane.

The first additive may form a solid electrolyte interface (SEI) layer with excellent or suitable high-temperature stability and improved ion conductivity on a surface of a negative electrode through a cyclic phospholane derivative including an - OPO- functional group, and may suppress or reduce a side reaction of $LiPF_6$ caused by a methoxy group combined with the derivative, thereby reducing gas generation resulting from a decomposition reaction of the electrolyte at high-temperature storage.

The first additive may be included in an amount of 0.01 wt% to 5 wt% based on the total weight of the electrolyte.

For example, the first additive may be included in an amount of equal to or greater than 0.1 wt% based on the total weight of the electrolyte. The first additive may be included in an amount of equal to or less than 4 wt%, equal to or less than 3 wt%, or equal to or less than 2 wt% based on the total weight of the electrolyte. In one or more embodiments, the first additive may be included in an amount of 0.1 wt% or 1.0 wt% based on the total weight of the electrolyte. If (e.g., when) the amount of the first additive falls within the ranges above, it may be possible to maximize or increase suppression of resistance increase at high temperatures and storage effect at high temperatures.

**Second Additive**

The second additive according to the present disclosure is represented by Chemical Formula 2.

Chemical Formula 2

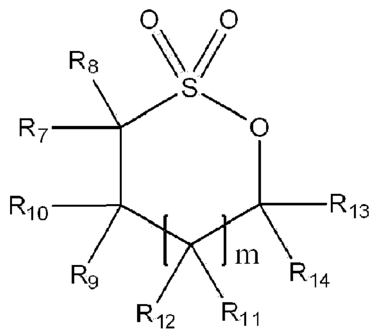

In Chemical Formula 2, $R_7$ to $R_{14}$ are each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and/or a substituted or unsubstituted C2 to C30 heterocyclic group.

The subscript m is an integer of 0 to 3. For example, in Chemical Formula 2, a pentagonal ring structure is provided if (e.g., when) m is 0, and a hexagonal ring structure is provided if (e.g., when) m is 1.

In Chemical Formula 2, $R_7$ to $R_{14}$ may each be hydrogen. The second additive may be a compound represented by Chemical Formula 2-1 or Chemical Formula 2-2. For example, the second additive may be 1,3-propane sultone and/or 1,4-butane sultone.

According to one or more embodiments, the second additive may include at least one selected from among a compound represented by Chemical Formula 2-1 and a compound represented by Chemical Formula 2-2.

Chemical Formula 2-1

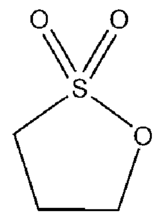

Chemical Formula 2-2

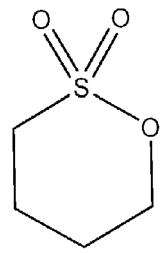

The second additive may form a film on a surface of a positive electrode to prevent or reduce an oxidation reaction of the electrolyte and decomposition of the surface of the positive electrode under a high-temperature environment. For example, a lone pair of electrons of a sulfonate group may act on Lewis acid (e.g., $PF_5^-$) possibly present in the electrolyte to stabilize the Lewis acid. In some embodiments, the unshared electron pair may also stabilize transition metal present on or released from the surface of the positive electrode. This may prevent or reduce a deterioration of the positive electrode to improve battery lifespan characteristics at high temperatures.

The second additive may be included in an amount of 0.01 wt% to 5 wt% based on the total weight of the electrolyte. For example, the second additive may be included in an amount of equal to or greater than 0.1 wt% or equal to or greater than 0.5 wt% based on the total weight of the electrolyte. The second additive may be included in an amount of equal to or less than 3 wt% or equal to or less than 2 wt% based on the total weight of the electrolyte. In one or more embodiments, the second additive may be included in an amount of 0.5 wt% to 1.0 wt% based on the total weight of the electrolyte. If (e.g., when) the second additive is included in an amount of less than 0.01 wt% based on the total weight of the electrolyte, it may be difficult to expect suppression of gas generation in the battery. If (e.g., when) the second additive is included in an amount of greater than 5 wt% based on the total weight of the electrolyte, battery initial charge/discharge efficiency and lifespan performance may be reduced in accordance with an increase in usage amount.

If (e.g., when) the second additive is utilized in combination with the first additive, a synergy effect may occur. For example, a more rigid film may be on (e.g., formed on) the surfaces of the positive and negative electrodes if (e.g., when) the first additive and the second additive are utilized in combination than if (e.g., when) each of the first and second additives is utilized alone. As a result, it may be possible to improve suppression of battery internal gas generation at a high-temperature environment and to enhance storage and lifespan characteristics at high temperatures.

According to one or more embodiments, an amount ratio of the second additive to the first additive may range from 1:5 to 5:1. If (e.g., when) the amount ratio of the second additive to the first additive is less than the range above, there may be a slight suppression of resistance at high temperatures, and if (e.g., when) the amount ratio of the second additive to the first additive is greater than the range above, there may be an abrupt reduction in lifespan efficiency of a rechargeable lithium battery.

In one or more embodiments of the present disclosure, a rechargeable lithium battery includes a positive electrode that includes a positive electrode active material, a negative electrode that includes a negative electrode active material, and an electrolyte, and the electrolyte includes a non-aqueous organic solvent, a lithium salt, a first additive represented by Chemical Formula 1, and a second additive represented by Chemical Formula 2.

The rechargeable lithium battery may be applied to automotive vehicles, mobile phones, and/or any other electrical devices, but the present disclosure is not limited thereto.

The positive electrode active material may include lithium composite oxide represented by Chemical Formula 3.

Chemical Formula 3 $$Li_xM^1_yM^2_zM^3_{1-y-z}O_{2-a}X_a$$

In Chemical Formula 3, the subscripts x, a, y, and z may satisfy the relationship of $0.5\leq x\leq 1.8$, $0\leq a\leq 0.05$, $0<y\leq 1$, $0\leq z\leq 1$, and $0\leq y+z\leq 1$.

$M^1$, $M^2$, and $M^3$ may each independently include at least one element selected from among metals such as Ni, Co, Mn, Al, B, Ba, Ca, Ce, Cr, Fe, Mo, Nb, Si, Sr, Mg, Ti, V, W, Zr, La, and/or a (e.g., any suitable) combination thereof.

X may include at least one element selected from among F, S, P, and/or Cl.

In one or more embodiments, in Chemical Formula 3, $M^1$ may be Ni, y may be $0.8\leq y\leq 1$, and z may be $0\leq z\leq 0.2$. In one or more embodiments, the positive electrode active material may include lithium-iron-phosphate-based oxide.

The negative electrode active material may include at least one selected from among graphite and/or a silicon composite.

If (e.g., when) the negative electrode active material includes both (e.g., simultaneously) a silicon composite and graphite, the silicon composite and the graphite may be present in the form of a mixture, and in this case, the silicon composite and the graphite may be included in a weight ratio of 1:99 to 50:50. For example, the silicon composite and the

graphite may be included in a weight ratio of 3:97 to 20:80 or 5:95 to 20:80.

The silicon composite may include a core including silicon-based particles and an amorphous carbon coating layer, and the silicon-based particle may include at least one selected from among a silicon-carbon composite, $SiO_x$ (where $0<x\leq2$), and/or a silicon alloy. For example, the silicon-carbon composite may include a core including silicon particles and crystalline carbon, and may also include an amorphous carbon coating layer on (e.g., positioned on) a surface of the core.

The crystalline carbon may include graphite, for example, natural graphite, artificial graphite, and/or a (e.g., any suitable) mixture thereof.

The following will describe one or more embodiments and comparative examples of the present disclosure. The following embodiments, however, are merely example, and the present disclosure is not limited to one or more embodiments discussed.

**Embodiments and Comparatives**

**Embodiment 1**

**(1) Preparation of Electrolyte**

1.15 M of $LiPF_6$ was dissolved in a non-aqueous organic solvent containing ethylene carbonate (EC), ethylmethyl carbonate (EMC), and dimethyl carbonate (DMC) mixed in a volume ratio of 25:55:20, and a first additive and a second additive were added to prepare an electrolyte. In the prepared electrolyte, the first additive and the second additive were included in amounts of 0.5 wt% and 1.0 wt%, respectively, based on the total weight of the electrolyte.

A substance represented by Chemical Formula 1-1 was utilized as the first additive. A substance represented by Chemical Formula 2-2 was utilized as the second additive.

Chemical Formula 1-1

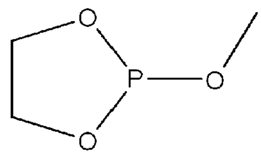

Chemical Formula 2-2

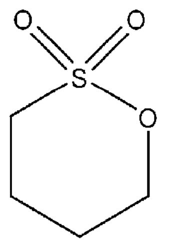

**(2) Fabrication of Rechargeable Lithium Battery**

$LiFePO_4$ as a positive electrode active material, polyvinylidene fluoride as a binder, and acetylene black as a conductive material were mixed in a weight ratio of 96:3:1, and the mixture was dispersed in N-methyl pyrrolidone to prepare a positive electrode active material slurry.

The positive electrode active material slurry was coated on an Al foil of 15 μm in thickness, dried at 100 °C, and then pressed to manufacture a positive electrode.

Artificial graphite and silicon nano-particles mixed in a weight ratio of 93:7 as a negative electrode active material, styrene-butadiene rubber (SBR) as a binder, and carboxymethyl cellulose (CMC) as a thickener were mixed in a weight ratio of 98:1:1, and the mixture was distributed in distilled water to prepare a negative electrode active material slurry.

The negative electrode active material slurry was coated on a Cu foil of 10 μm in thickness, dried at 100 °C, and then pressed to manufacture a negative electrode.

The positive electrode, the negative electrode, and a polyethylene separator of 10 μm in thickness were

assembled to manufacture an electrode assembly, and the electrolyte was introduced to fabricate a rechargeable lithium battery.

**Embodiment 2**

An electrolyte and a rechargeable lithium battery were each fabricated independently in substantially the same method as in Embodiment 1, except that the first additive represented by Chemical Formula 1-1 was added in an amount of 0.1 wt% and the second additive represented by Chemical Formula 2-2 was added in an amount of 0.5 wt% when the electrolyte was prepared.

**Embodiment 3**

An electrolyte and a rechargeable lithium battery were each fabricated independently in substantially the same method as in Embodiment 1, except that the first additive represented by Chemical Formula 1-1 was added in an amount of 0.1 wt% when the electrolyte was prepared.

**Embodiment 4**

An electrolyte and a rechargeable lithium battery were each fabricated independently in substantially the same method as in Embodiment 1, except that the second additive represented by Chemical Formula 2-2 was added in an amount of 0.5 wt% when the electrolyte was prepared.

**Embodiment 5**

An electrolyte and a rechargeable lithium battery were each fabricated independently in substantially the same method as in Embodiment 1, except that the first additive represented by Chemical Formula 1-1 was added in an amount of 1.0 wt% and the second additive represented by Chemical Formula 2-2 was added in an amount of 0.5 wt% when the electrolyte was prepared.

**Embodiment 6**

An electrolyte and a rechargeable lithium battery were each fabricated independently in substantially the same method as in Embodiment 1, except that the first additive represented by Chemical Formula 1-1 was added in an amount of 1.0 wt% when the electrolyte was prepared.

**Comparative 1**

An electrolyte and a rechargeable lithium battery were each fabricated independently in substantially the same method as that in Embodiment 1, except that neither the first additive represented by Chemical Formula 1-1 nor the second additive represented by Chemical Formula 2-2 was added when the electrolyte was prepared.

**Comparative 2**

An electrolyte and a rechargeable lithium battery were each fabricated independently in substantially the same method as that in Embodiment 1, except that the first additive represented by Chemical Formula 1-1 was not added when the electrolyte was prepared.

**Evaluation Example**

The rechargeable lithium batteries were evaluated by the following methods.

**Evaluation 1: Storage Characteristics at High Temperature (60°C) - DCIR Increase Rate**

For each of the rechargeable lithium batteries according to the embodiments and the comparatives , after an initial direct-current internal resistance (DCIR) was measured as $\Delta V/\Delta I$ (voltage change/current change), the battery was allowed to charge its maximum energy state into a full charge state (SOC 100%) and stored in the charged state at a high temperature (60°C) for 30 days, and then a direct-current resistance was measured to calculate a DCIR increase rate (%) according to Equation 1 and the result is listed in Table 1.

Equation 1

$$\text{DCIR increase rate (\%)} = (\text{DCIR after 30 days} / \text{initial DCIR}) \times 100$$

Table 1

| Category | 1st additive | | 2nd additive | | Initial DCIR (mΩ) | DCIR after high-temperature storage (mΩ) | DCIR Increase rate (%) |
|---|---|---|---|---|---|---|---|
| | Type | Amount (wt%) | Type | Amount (wt%) | | | |
| Embodiment 1 | Chemical Formula 1-1 | 0.5 | Chemical Formula 2-2 | 1.0 | 17.54 | 18.07 | 103 |
| Embodiment 2 | Chemical Formula 1-1 | 0.1 | Chemical Formula 2-2 | 0.5 | 17.02 | 21.10 | 124 |
| Embodiment 3 | Chemical Formula 1-1 | 0.1 | Chemical Formula 2-2 | 1.0 | 17.11 | 20.70 | 121 |
| Embodiment 4 | Chemical Formula 1-1 | 0.5 | Chemical Formula 2-2 | 0.5 | 17.19 | 19.25 | 112 |
| Embodiment 5 | Chemical Formula 1-1 | 1.0 | Chemical Formula 2-2 | 0.5 | 18.51 | 20.03 | 119 |
| Embodiment 6 | Chemical Formula 1-1 | 1.0 | Chemical Formula 2-2 | 1.0 | 18.86 | 20.56 | 109 |
| Comparative 1 | - | - | - | - | 16.02 | 20.83 | 130 |
| Comparative 2 | - | - | Formula 2-2 | 1.0 | 16.55 | 21.846 | 132 |

**Evaluation 2: Storage Characteristics at High Temperature (60°C) - Lifespan Characteristics**

For each of the rechargeable lithium batteries according to the embodiments and the comparatives, after an initial capacity and a capacity after being stored at a high temperature (60°C) for 30 days, a capacity retention rate (%) was calculated according to Equation 2 and the result is listed in Table 2.

Equation 2

$$\text{Capacity retention rate (\%)} = (\text{discharge capacity after 30 days} / \text{initial discharge capacity}) \times 100$$

Table 2

| Category | Initial capacity (Ah) | Capacity after high-temperature storage (Ah) | Capacity retention rate (%) |
|---|---|---|---|
| Embodiment 1 | 4.82 | 4.50 | 93.4 |
| Embodiment 2 | 4.80 | 4.39 | 91.4 |
| Embodiment 3 | 4.80 | 4.41 | 91.9 |
| Embodiment 4 | 4.81 | 4.46 | 92.7 |
| Embodiment 5 | 4.80 | 4.42 | 92.1 |
| Embodiment 6 | 4.81 | 4.46 | 92.8 |

(continued)

| Category | Initial capacity (Ah) | Capacity after high-temperature storage (Ah) | Capacity retention rate (%) |
|---|---|---|---|
| Comparative 1 | 4.79 | 4.30 | 89.7 |
| Comparative 2 | 4.79 | 4.35 | 90.8 |

**Evaluation 3: Gas Generation at High Temperature**

The rechargeable lithium batteries according to the embodiments and the comparatives underwent an evaluation of gas generation characteristics at high temperatures. The rechargeable lithium batteries according to the embodiments and the comparatives were charged to 4.2V at 45°C and then stored for 7 days at 60°C.

For each of the rechargeable lithium batteries fabricated in the embodiments and the comparatives, an initial gas generation and a gas generation after being stored for 7 days were measured, the gas generation was calculated according to Equation 3, and the result is listed in Table 3.

Equation 3

$$\text{Gas generation (\%)} = (\text{gas generation after 7 days / initial gas generation}) \times 100$$

Table 3

| Category | Initial gas generation (mL) | Gas generation after high-temperature storage (mL) | Gas generation (%) |
|---|---|---|---|
| Embodiment 1 | 9.83 | 10.02 | 101.9 |
| Embodiment 2 | 10.25 | 12.21 | 119.1 |
| Embodiment 3 | 10.22 | 12.04 | 117.8 |
| Embodiment 4 | 10.04 | 11.09 | 110.5 |
| Embodiment 5 | 10.13 | 11.58 | 114.3 |
| Embodiment 6 | 10.01 | 10.78 | 107.7 |
| Comparative 1 | 10.33 | 12.63 | 122.3 |
| Comparative 2 | 10.35 | 12.49 | 120.7 |

**Evaluation 4: Charge/Discharge Characteristics at Room Temperature**

Each of the rechargeable lithium batteries according to the embodiments and the comparatives was allowed to evaluate charge/discharge characteristics at room temperature. The rechargeable lithium battery was charged and discharged at 25°C for 300 cycles under the condition of 0.5 C charge (CC/CV, 3.65 V, 0.2 C cut-off) and 1.0 C discharge (CC, 2.5 V cut-off).

A room-temperature capacity retention rate was calculated according to Equation 4. The result is listed in Table 4.

Equation 4

$$\text{Room-temperature capacity retention rate (\%)} = (\text{discharge capacity after 300 cycles / discharge capacity after 1 cycle}) \times 100$$

Table 4

| | 25°C, 300 cycles |
|---|---|
| | Room-temperature capacity retention rate (%) |
| Embodiment 1 | 98.0 |
| Embodiment 2 | 93.7 |
| Embodiment 3 | 94.2 |
| Embodiment 4 | 95.8 |
| Embodiment 5 | 95.1 |
| Embodiment 6 | 96.9 |
| Comparative 1 | 88.3 |
| Comparative 2 | 90.6 |

**Comprehensive Evaluation**

Referring to Tables 1 and 2, it may be ascertained that, compared to the comparatives, there is an improvement in the DCIR increase rate during a storage at a high temperature (60°C) in the embodiments each of which utilizes the electrolyte according to one or more embodiments of the present disclosure.

Referring to Table 3, it may be observed that, compared to the comparatives, the rechargeable lithium battery fabricated according to each of the comparatives has a large amount of gas generation at high-temperature storage (60°C). Therefore, the rechargeable lithium battery utilizing the electrolyte according to one or more embodiments of the present disclosure may effectively suppress or reduce the gas generation at a high temperature (60°C).

Referring to Table 4, it may be ascertained that, compared to the comparatives, there is an improvement in a capacity retention rate in accordance with charge/discharge cycles at room temperature in the embodiments each of which utilizes the electrolyte according to one or more embodiments of the present disclosure.

In an electrolyte according to one or more embodiments, a phosphate-based compound substituted with a methoxy group and a cyclic sulfonate-based compound may be combined to be utilized as an additive to exhibit an improvement in lifespan characteristics and stability under the condition of high temperatures during the activation of a rechargeable lithium battery. For example, an electrolyte containing a phosphate-based compound with a methoxy group and a cyclic sulfonate-based compound as additives should enhance lifespan and stability at high temperatures during the activation of a rechargeable lithium battery.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

**Claims**

**1.** An electrolyte for a rechargeable lithium battery (100) comprising:

a non-aqueous organic solvent;
a lithium salt;
a first additive represented by Chemical Formula 1; and
a second additive represented by Chemical Formula 2,

Chemical Formula 1

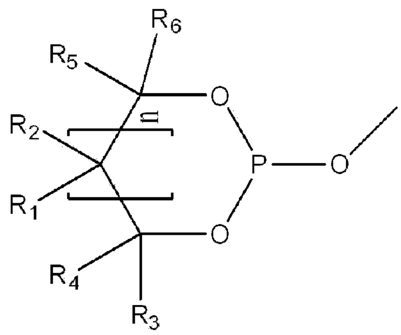

Chemical Formula 2

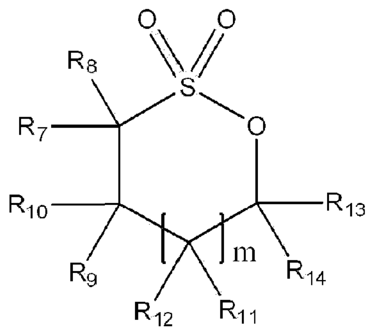

,

wherein, in Chemical Formula 1,
$R_1$ to $R_6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1,
wherein, in Chemical Formula 2,
$R_7$ to $R_{14}$ are each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group, and
m is an integer of 0 to 3, and
wherein the term "substituted" refers to that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

**2.** The electrolyte of claim 1, wherein Chemical Formula 1 comprises at least one selected from among a compound represented by Chemical Formula 1-1 and a compound represented by Chemical Formula 1-2,

Chemical Formula 1-1

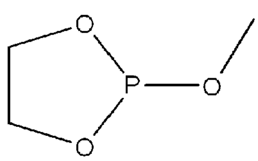

Chemical Formula 1-2

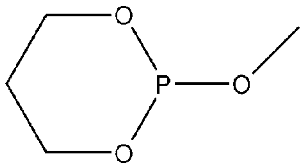

.

3. The electrolyte of claim 1 or 2, wherein the second additive comprises at least one selected from among a compound represented by Chemical Formula 2-1 and a compound represented by Chemical Formula 2-2,

Chemical Formula 2-1

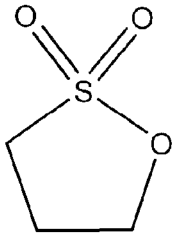

Chemical Formula 2-2

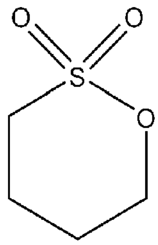

.

4. The electrolyte of any one of the preceding claims, wherein the first additive has an amount of 0.01 wt% to 5 wt% based on a total weight of the electrolyte.

5. The electrolyte of any one of the preceding claims, wherein the second additive has an amount of 0.01 wt% to 5 wt% based on a total weight of the electrolyte.

6. The electrolyte of any one of the preceding claims, wherein an amount ratio of the second additive represented by Chemical Formula 2 to the first additive represented by Chemical Formula 1 is 1:5 to 5:1.

7. The electrolyte of any one of the preceding claims, wherein the non-aqueous organic solvent comprises at least one selected from among ethylmethyl carbonate (EMC), ethylene carbonate (EC), dimethyl carbonate (DMC), propylene carbonate (PC), propyl propionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

8. The electrolyte of any one of the preceding claims, wherein the lithium salt comprises at least one selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$.

9. The electrolyte of any one of the preceding claims, wherein a concentration of the lithium salt is 0.1 M to 2.0 M.

10. A rechargeable lithium battery (100), comprising:

a positive electrode (10) comprising a positive electrode active material;

a negative electrode (20) comprising a negative electrode active material; and
the electrolyte of claim 1.

**11.** The rechargeable lithium battery (100) of claim 10, wherein the positive electrode active material comprises lithium composite oxide represented by Chemical Formula 3,

Chemical Formula 3 $Li_xM^1_yM^2_zM^3_{1-y-z}O_{2-a}X_a$,

wherein, in Chemical Formula 3,
$0.5 \le x \le 1.8$, $0 \le a \le 0.05$, $0 < y \le 1$, $0 \le z \le 1$, and $0 \le y+z \le 1$,
$M^1$, $M^2$, and $M^3$ each independently comprises at least one selected from among Ni, Co, Mn, Al, B, Ba, Ca, Ce, Cr, Fe, Mo, Nb, Si, Sr, Mg, Ti, V, W, Zr, La, and a combination thereof, and
X comprises at least one selected from among F, S, P, and Cl.

**12.** The rechargeable lithium battery (100) of claim 10 or 11, wherein the positive electrode active material comprises a lithium-iron-phosphate-based compound.

**13.** The rechargeable lithium battery (100) of any one of claims 10 to 12, wherein the negative electrode active material comprises at least one selected from among graphite and a silicon composite.

**14.** The rechargeable lithium battery (100) of any one of claims 10 to 13, wherein the rechargeable lithium battery (100) is a cylindrical, prismatic, pouch-type, or coin-type battery.

FIG. 1

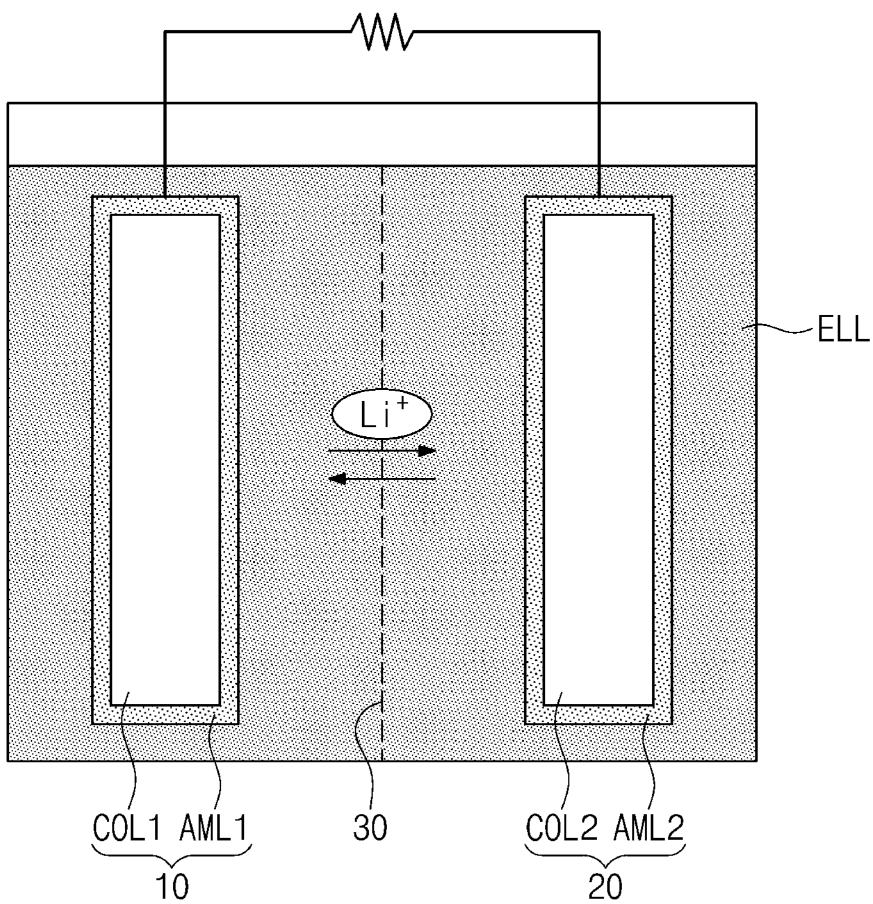

FIG. 2

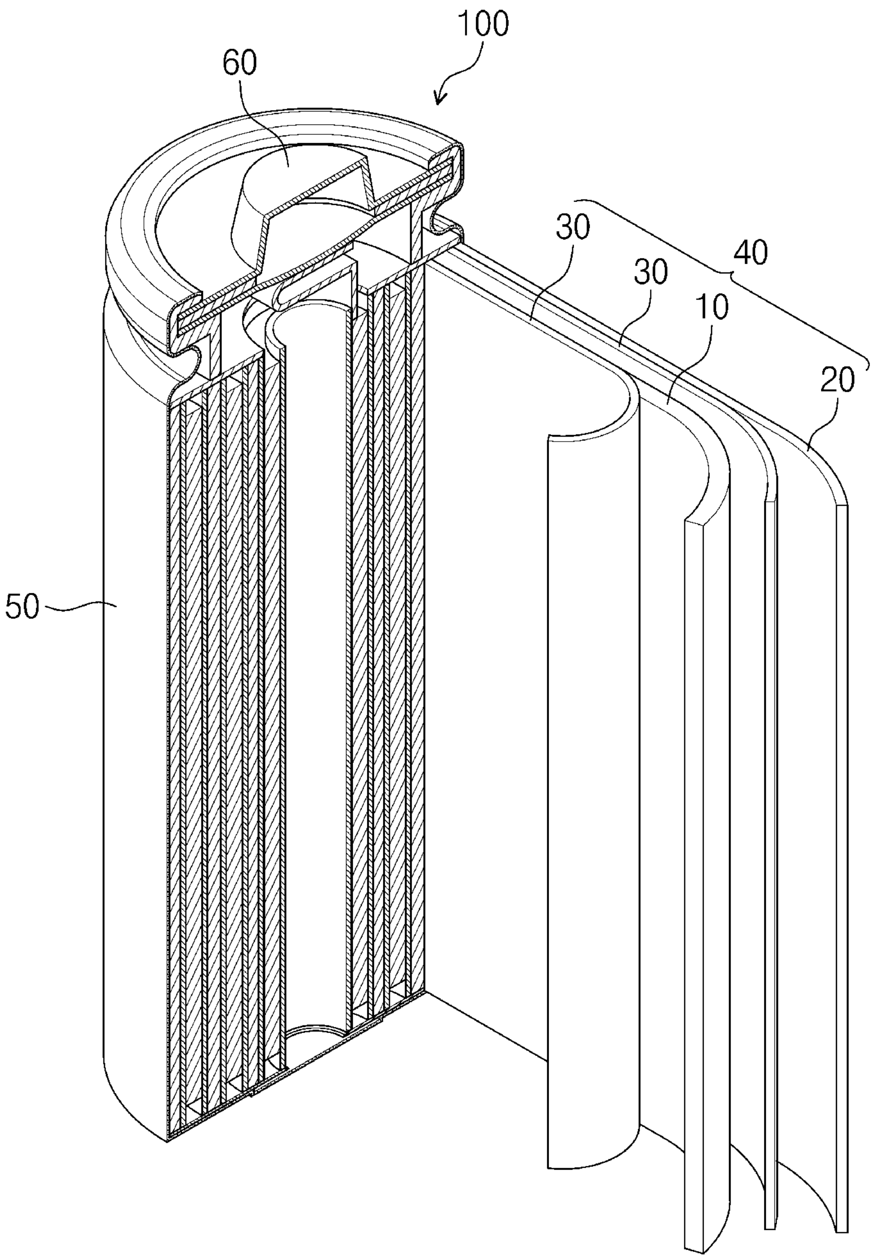

FIG. 3

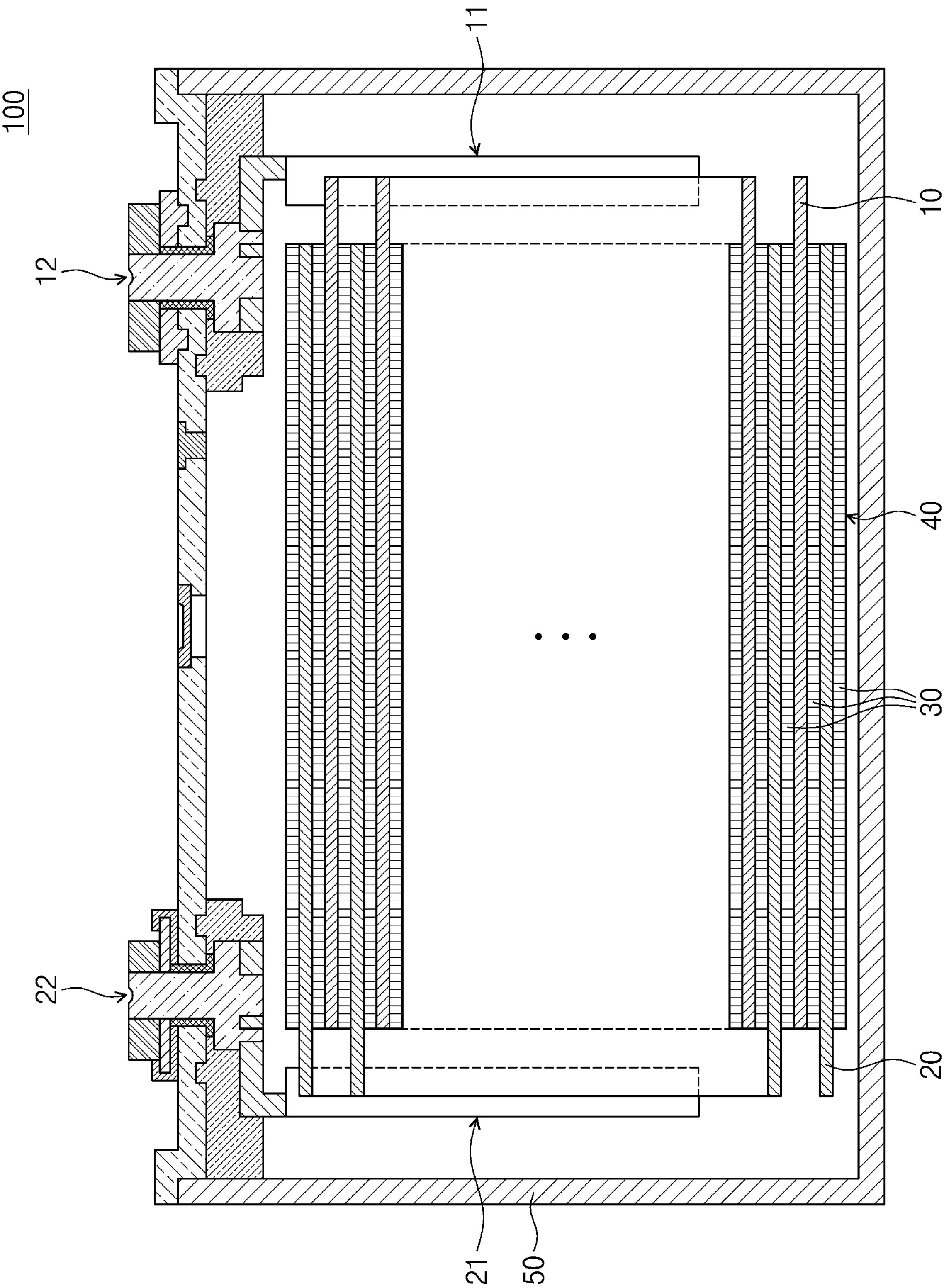

FIG. 4

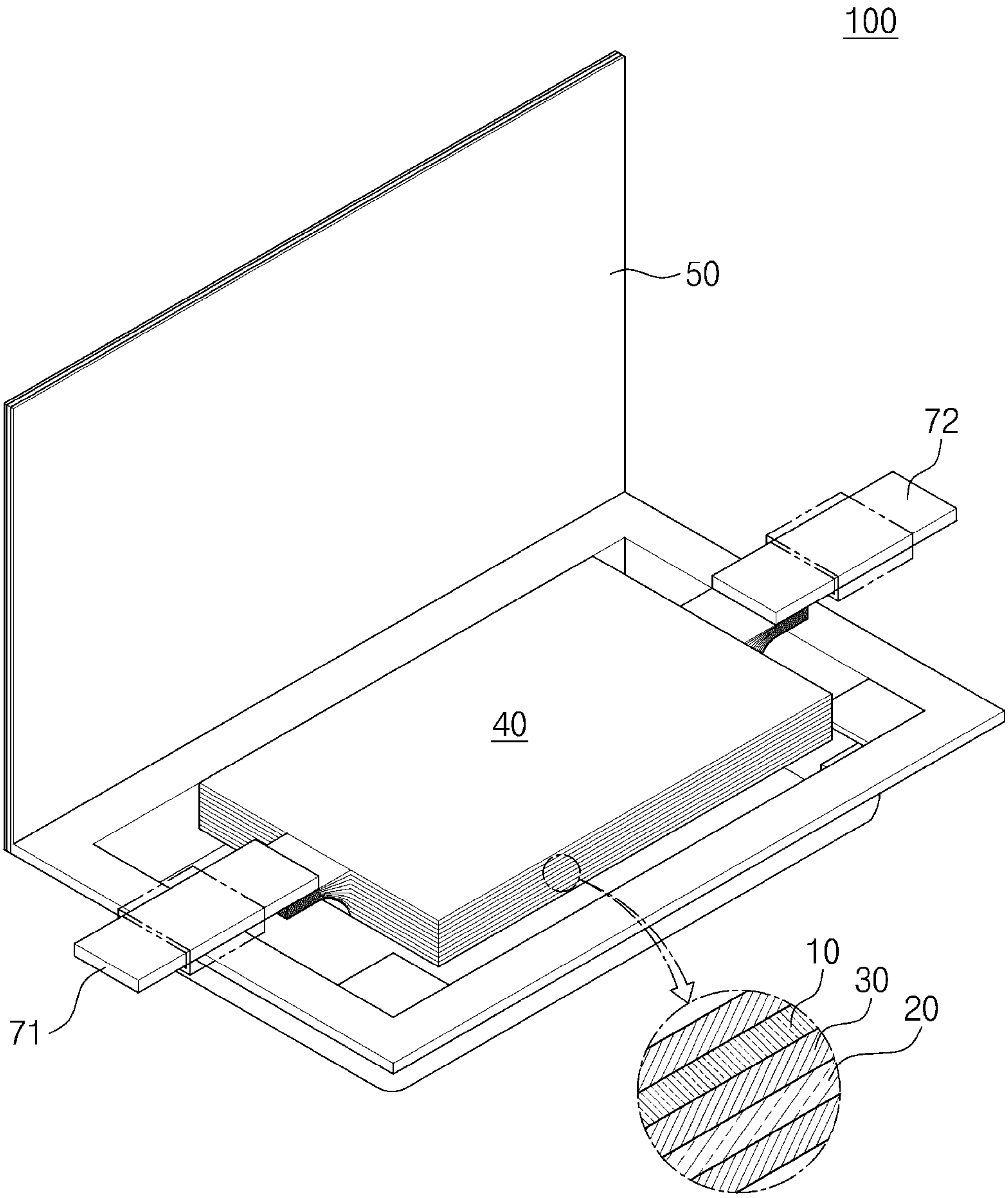

FIG. 5

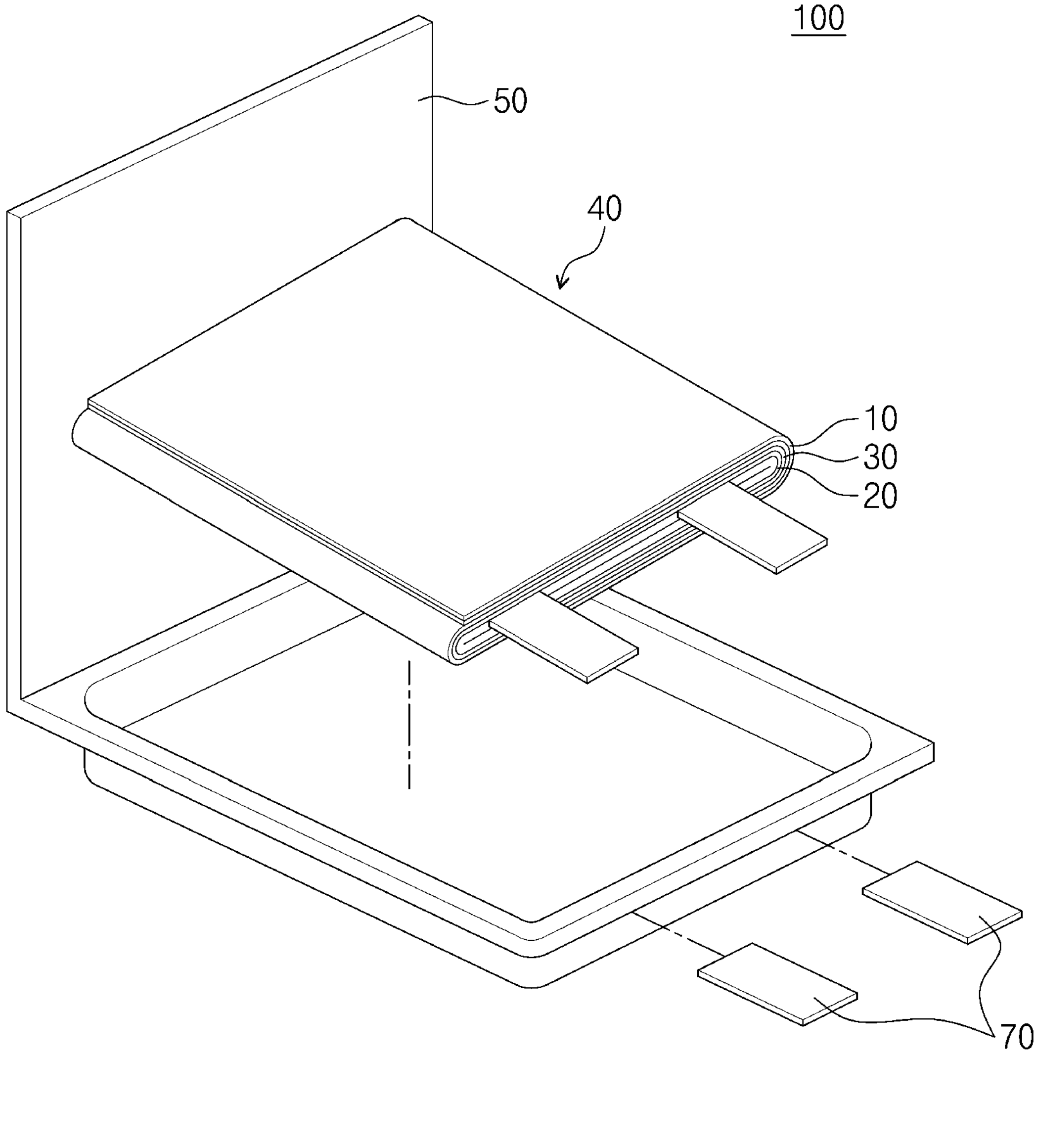

Europäisches Patentamt
European Patent Office
Office européen des brevets

# EUROPEAN SEARCH REPORT

Application Number
EP 25 17 3461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 996 192 A (SVOLT ENERGY TECHNOLOGY CO., LTD.) 7 May 2024 (2024-05-07)<br>* abstract *<br>* paragraph [0002] *<br>* paragraph [0008] - paragraph [0012] *<br>* example 3 *<br>* claims 1, 2, 4-10 *<br>----- | 1-14 | INV.<br>H01M10/0567<br>H01M10/0525<br>H01M10/42<br><br>ADD.<br>H01M4/36<br>H01M4/38<br>H01M4/58<br>H01M4/587<br>H01M10/0568<br>H01M10/0569 |
| Y | KR 102 244 060 B1 (SAMSUNG SDI CO., LTD.) 22 April 2021 (2021-04-22)<br>* abstract *<br>* paragraph [0009] - paragraph [0019] *<br>* paragraph [0098] - paragraph [0099] *<br>* examples 1-3; table 1 *<br>* claims 1-5, 8-10 *<br>----- | 1-14 | |
| Y | CN 117 638 232 A (SVOLT ENERGY TECHNOLOGY CO., LTD.) 1 March 2024 (2024-03-01)<br>* abstract *<br>* paragraph [0007] - paragraph [0020]; compounds 8, 14 *<br>* examples 1, 4-7, 9 *<br>* claims 1, 3-10 *<br>----- | 1-14 | TECHNICAL FIELDS SEARCHED (IPC)<br>H01G<br>H01M |
| Y | CN 108 428 942 A (XIAMEN SHOUNENG TECHNOLOGY CO., LTD.) 21 August 2018 (2018-08-21)<br>* abstract *<br>* paragraph [0008] - paragraph [0011] *<br>* comparative examples 4, 5; paragraph [0039]; examples 1, 7, 8 *<br>* paragraph [0046]; example 2 *<br>* paragraph [0049]; example 3 *<br>* claims 1, 3-7 *<br>----- | 1-14 | |

-/--

The present search report has been drawn up for all claims

1

| Place of search | Date of completion of the search | Examiner |
|---|---|---|
| Munich | 9 October 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 17 3461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 108 365 265 A (ZHONGSHAN HONGYI NEW MATERIAL CO., LTD.) 3 August 2018 (2018-08-03) * abstract * * paragraph [0007] - paragraph [0011] * * paragraph [0018] - paragraph [0019] * * examples 1, 2, 9 * * claims 1, 3-10 * ----- | 1-14 | |

TECHNICAL FIELDS SEARCHED (IPC)

The present search report has been drawn up for all claims

1

| Place of search | Date of completion of the search | Examiner |
|---|---|---|
| Munich | 9 October 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 25 17 3461

This annex lists the patent family members relating to the patent documents cited in the above-mentioned European search report. The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
| --- | --- | --- | --- |
| CN 117996192 A | 07-05-2024 | CN 117996192 A<br>WO 2025180503 A1 | 07-05-2024<br>04-09-2025 |
| KR 102244060 B1 | 22-04-2021 | NONE | |
| CN 117638232 A | 01-03-2024 | NONE | |
| CN 108428942 A | 21-08-2018 | NONE | |
| CN 108365265 A | 03-08-2018 | NONE | |

EPO FORM P0459

For more details about this annex : see Official Journal of the European Patent Office, No. 12/82